# EUROPÄISCHE PATENTSCHRIFT

(11) **EP 1 118 219 B1**
(45) Veröffentlichungstag und Bekanntmachung des Hinweises auf die Patenterteilung: **18.12.2002**
(21) Anmeldenummer: 99969878.0
(22) Anmeldetag: 13.09.1999
(51) Int. Cl.: H04N 7/035

(54) **MULTISTANDARD-TAKTRÜCKGEWINNUNGSSCHALTUNG**
MULTISTANDARD CLOCK RECOVERY CIRCUIT
CIRCUIT MULTISTANDARD D'EXTRACTION DU SIGNAL D'HORLOGE

(30) Priorität: 29.09.1998 DE 19844700
(43) Veröffentlichungstag der Anmeldung: 25.07.2001
(73) Patentinhaber: Micronas Munich GmbH, 81541 München (DE)
(72) Erfinder: ENGLERT, Ulrich, D-81549 München (DE)
(74) Vertreter: Patentanwälte Westphal, Mussgnug & Partner
(86) Internationale Anmeldenummer: DE9902886
(87) Internationale Veröffentlichungsnummer: WO00019719

(56) Entgegenhaltungen:
- EP-A- 0 390 958

## Beschreibung

Die vorliegende Erfindung betrifft eine Multistandard-Taktrückgewinnungschaltung zum Rückgewinnen von Teletextsignalen gemäß dem Oberbegriff von Anspruch 1; wie aus der EP-A-0, 390, 958 bekannt.

Zur Rückgewinnung von Teletextsignalen aus einem Videosignal, wie etwa einem CVBS-Signal, muß die Phaseninformation dieses Signals während der sogenannten Clock-Run-In-Phase extrahiert werden, um das Signal in einer nachfolgenden digitalen Schaltung taktsynchron abtasten zu können. Da in der vertikalen Austastlücke des Signals mehrere Teletextsignale unterschiedlicher Art bzw. Standards in aufeinander folgenden Fernsehzeilen gesendet werden können, wie etwa ein VPS-, TXT-, WSS CC-Signal und dergleichen, muß eine Rückgewinnungsschaltung die verschiedenen Taktfrequenzen zeilenweise extrahieren können.

Bislang wird hierzu eine Rückgewinnungsschaltung mit einer Vielzahl von PLL-Schaltkreisen (vor allen Dingen vom Typ H-PLL) verwendet, wobei ein erster PLL-Schaltkreis, der auf die Zeilenfrequenz verriegelt ist bzw. lockt, ein vielfaches der Zeilenfrequenz erzeugt, welches der gewünschten Abtastfrequenz des Signals entspricht. Dieser Takt wird dann über einen Phasenschieber während der Clock-Run-In-Phase an einen zweiten PLL-Schaltkreis angelegt, welcher sich auf den Clock-Run von dem zu unterteilenden bzw. slicenden Signal lockt. Typische Anwendung hierfür sind VPS/PDC-Dekoder, TVTs und dergleichen.

Für eine Multistandardlösung benötigt die Rückgewinnungsschaltung gemäß dem Stand der Technik soviele PLL-Schaltkreise, wie Standards unterstützt werden sollen, so daß dieses bekannte Schaltungskonzept bauteileaufwendig und damit kostenungünstig ist. Ferner ist die Zeitkonstante eines PLL-Schaltkreises in der Regel so groß, daß die hierfür erforderlichen Loop-Filter in analoger Ausführung nicht kostengünstig integriert werden können. Dies bedeutet, daß für jeden Standard zumindest ein zusätzlicher Pin bzw. Anschluß des integrierten Bausteins benötigt wird, in welcher die Rückgewinnungsschaltung implementiert ist. Schließlich muß der Takt jedes PLL-Schaltkreises, der einen Phasenschieber darstellt, zeilenweise von einer Frequenz zur nächsten gezogen werden.
Die damit verbundene Einschwingzeitkonstante kollidiert mit der Forderung, eine möglichst langsame Einschwingzeitkonstante für den Vorgang des Phasenschiebens zu erzielen. Deshalb war bislang ein Kompromiß bezüglich der Dimensionierung unumgänglich und damit ein unzureichendes Abtast-Leistungsvermögen unvermeidlich. Bei extremen Frequenzunterschieden - beispielsweise 1 MHz für das CC- bzw. Closed-Caption-Signal bzw. 6,9375 MHz für das Teletext-Signal - muß pro Standard jeweils ein PLL-Schaltkreis vorgesehen werden, was wiederum eine relativ aufwendige Schaltung und damit hohe Kosten zur Folge hat.

Angesichts dieses Standes der Technik besteht eine Aufgabe der vorliegenden Erfindung darin, eine Schaltung zur Multistandard-Taktrückgewinnung der im Oberbegriff des Anspruchs 1 genannten Art zu schaffen, die bei deutlich höherem Leistungsvermögen mit einer relativ kleinen Anzahl an Bauteilen realisierbar ist und dennoch ein höheres Leistungsvermögen gewährleistet als die Schaltung gemäß dem Stand der Technik.

Gelöst wird diese Aufgabe durch den Gegenstand mit den Merkmalen des Anspruchs 1. Vorteilhafte Weiterbildungen der Erfindung sind in den abhängigen Ansprüchen angegeben.

Mit anderen Worten basiert die erfindungsgemäße Schaltung auf einem einzigen PLL-Schaltkreis und im Unterschied zum Stand der Technik wird die Abtastfrequenz des rückzugewinnenden Signals nicht mehr zeilengelockt erzeugt, sondern auf Grundlage einer einzigen Quarzfrequenz (Basisfrequenz).

Es ist vorgesehen, aus der Quarz-Basisfrequenz eine normunabhängige Bezugsfrequenz zu erzeugen, aus der mit Hilfe von Teilern die jeweiligen Abtastfrequenzen gewonnen werden. Bevorzugt werden die doppelten Abtastfrequenzen erzeugt, um mit dem Phasendetektor des PLL-Schaltkreises ein symmetrisches Verhalten beim Phasenschieben zu gewährleisten.

Die aus der quarzstabilen Basisfrequenz erfindungsgemäß erzeugte Bezugsfrequenz, aus welcher die Abtastfrequenzen mittels Frequenzteilern gewonnen werden, stellt im wesentlichen eine unabhängig wählbare Frequenz dar. In der Praxis sind jedoch solche Frequenzen in Betracht zu ziehen, die ein gemeinsames Vielfaches der zu gewinnenden Abtastfrequenzen darstellen. Aktuell sind Frequenzteiler in 1/16-Schritten implementierbar, weshalb als Bezugsfrequenz 138,75 MHz, entsprechend beispielsweise dem 27,5fachen der VPS-Frequenz und dem 20fachen der Teletextfrequenz gewählt wird.

Beim Betrieb der erfindungsgemäßen Schaltung wird mit Beginn des Clock-Run-In der Takt der jeweiligen Abtastfrequenz in Phase zum Datum verschoben. Nach dem nächsten H-Impuls wird dann auf den anderen der beiden Phasendetektoren umgeschaltet.

Folgende Vorteile werden durch die erfindungsgemäße Schaltung erzielt:
- Unabhängig von der Anzahl von Standards wird nur noch ein einziger PLL-Schaltkreis benötigt;
- aufgrund der stabilen Frequenz der Basisfrequenz kann der I-Anteil beliebig groß gewählt werden, ohne die Stabilität der Abtastung bei Umschalten zwischen verschiedenen Normen ungünstig zu beeinflussen;
- die Anzahl der Pins bzw. Anschlüssen eines integrierten Bauteils, in welchem die erfindungsgemäße Schaltung implementiert ist, wird auf einen unabhängig von der Anzahl der unterstützten Normen für sämtliche Standards im Vergleich zum Stand der Technik verringert; und
- da im Gegensatz zum Stand der Technik der Takt nun nicht mehr an die Zeilenfrequenz gekoppelt ist, ist auch Slicen von Videorecorder-Signalen möglich, was bisher aufgrund von Phasensprüngen im Horizontalsignal nicht möglich gewesen ist.

Nachfolgend wird die Erfindung anhand der Zeichnung beispielhaft näher erläutert; es zeigen:
- Fig. 1: eine erste Ausführungsform der erfindungsgemäßen Schaltung, und
- Fig. 2: eine zweite Ausführungsform der erfindungsgemäßen Schaltung.

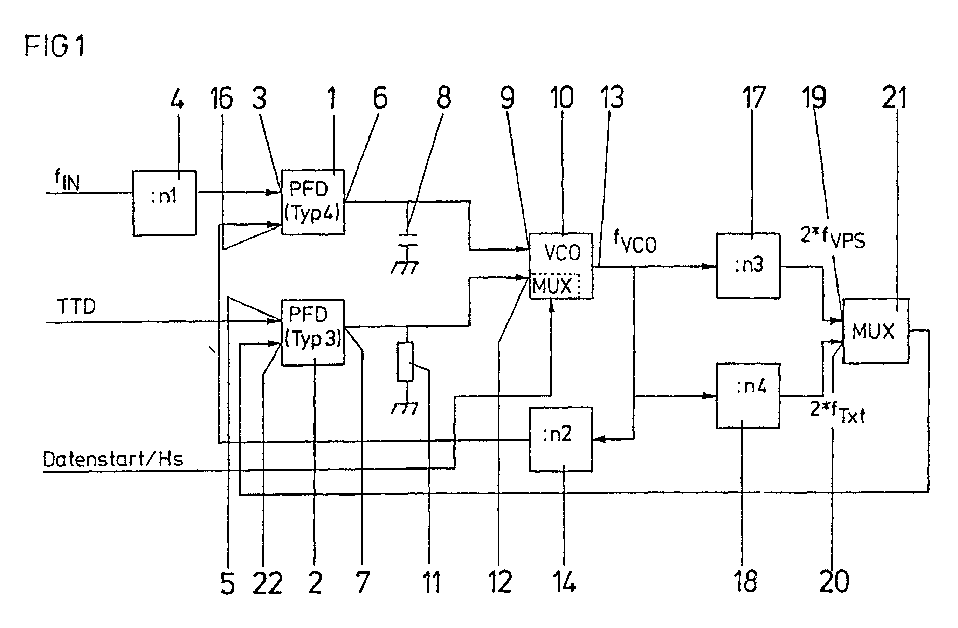

Zunächst wird anhand von Fig. 1 eine erste Ausführungsform der erfindungsgemäßen Schaltung erläutert. Die in Fig. 1 gezeigte Schaltung stellt eine Taktrückgewinnungsschaltung dar und basiert auf einem einzigen PLL-Schaltkreis mit zwei schaltbaren Frequenz- und Phasendetektoren, auf die im folgenden auch als PFD bezug genommen wird, und die mit den Bezugsziffern 1 bzw. 2 bezeichnet sind. Bei dem PFD 1 handelt es sich um einen PFD vom sogenannten Typ 4, der sowohl frequenz- sowie phasenempfindlich ist und die Phase in dem PLL-Schaltkreis verändert. Bei dem PFD 2 handelt es sich um einen PFD vom sogenannten Typ 3, der ein reiner phasenempfindlicher Detektor ist und ausschließlich die Phase des PLL-Schaltkreises verändert.

Sowohl der PFD 1 wie der PFD 2 haben zwei Eingänge und jeweils einen Ausgang. An den ersten Eingang 3 des PFD 1 ist über einen Frequenzteiler 4, auf den nachfolgend im einzelnen eingegangen wird, ein Basissignal f_{IN} angelegt. Am ersten Eingang 5 des zweiten PFD 2 liegt direkt das rückzugewinnende Signal, im dargestellten Beispiel TTD(Teletext-Daten)-Signal. Der Ausgang 6 des ersten PFD 1 ist in an sich bekannter Weise über einen Kondensator 8 auf Masse und an den ersten Eingang 9 eines spannungsgesteuerten Oszillators bzw. VCO 10 angelegt. Der Ausgang 7 des PFD 2 ist in an sich bekannter Weise über einen Widerstand 11 auf Masse und an den zweiten Eingang 12 des VCO 10 angelegt. Der Ausgang 13 des VCO 10 ist über einen Frequenzteiler 14 an den zweiten Eingang 16 des PFD 1 angelegt. Außerdem ist der Ausgang 13 des VCO 10 mit einem Frequenzteiler 17 und einem Frequenzteiler 18 verbunden, die ausgangsseitig an Eingänge 19 und 20 eines Multiplexers 21 angeschlossen sind, dessen Ausgang mit dem zweiten Eingang 22 des PFD 2 verbunden ist.

In der nachfolgenden Tabelle 1 sind für den Fall eines PAL-Videosignals die Werte der Basisfrequenz f_{IN} und der am Ausgang des VCO 10 zur Verfügung stehenden Bezugsfrequenz f_{VCO} ebenso aufgeführt wie die Teilungsfaktoren der Frequenzteiler 4, 14, 17 und 18. Für den Fall, daß mit Hilfe der Teiler 17, 18 die Abtastfrequenzen für das PAL-VPS-Signal und das PAL/TXT-Signal gewonnen werden sollen.

**Tabelle 1**

| f_{IN} | f_{VCO} | n1 | n2 | n3 | n4 | Delta f |
|---|---|---|---|---|---|---|
| 6 MHz | 138,75 MHz | 8 | 185 | 13,875 | 10 | 0% |

Delta f bezeichnet hierbei die Abweichung zwischen der Istfrequenz (d. h. Ausgang der PLL) und der Sollfrequenz.

Die in Fig. 1 gezeigte Schaltung arbeitet wie folgt.

Zu sämtlichen Zeitpunkten, zu welchen kein TTD-Signal vorliegt, schwingt der PLL-Schaltkreis bestimmt durch die Teilerverhältnisse n1, n2 auf einem Vielfachen der Basisfrequenz (im vorliegenden Fall auf 138,75 MHz bei f_{IN} gleich 6 MHz). Dieser Takt wird bestimmt durch die Frequenzteiler 17, 18 mit dem Teilungsverhältnis n3 bzw. n4 auf die TXT- bzw. VPS-Frequenz von 2 mal 6,9375 bzw. 5 MHz heruntergeteilt. Mit anderen Worten stehen die beiden notwendigen System frequenzen zur Abtrennung der diesbezüglichen Daten jederzeit ohne irgendein Einschwingverhalten, wie beim Stand der Technik zur Verfügung.

Mit Erkennung des Datenstarts bzw. Vorliegen eines TTD-Signals wird von dem PFD 1, der sowohl auf Frequenzen wie Phasen empfindlich ist, auf den lediglich phasensensitiven PFD 2 umgeschaltet, der somit, abhängig vom gewählten Standard entweder den VPS-Takt oder den TXT-Takt in Phase zu den einlaufenden Daten schiebt.

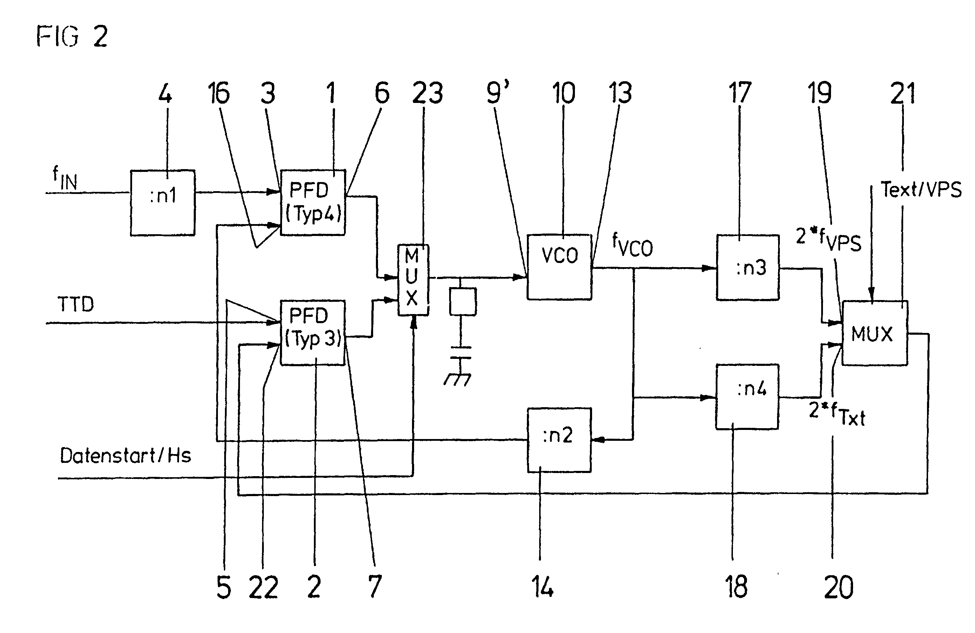

Fig. 2 zeigt eine alternative Ausführungsform zu der Schaltung von Fig. 1, wobei dieselben Schaltungsbestandteile mit denselben Bezugsziffern bezeichnet sind, so daß sich eine gesonderte Erläuterung erübrigt.

Die Schaltungsvariante von Fig. 2 umfaßt zusätzlich zu derjenigen von Fig. 1 einen Multiplexer 23, der zwischen die Ausgänge 6, 7 von PFD 1 bzw. PFD 2 und den Eingang 9' des VCO 10 geschaltet ist. Als weiteres Eingangssignal wird dem Multiplexer 23 Datenstart/Hs zugeführt. Außerdem sind der Kondensator 8 und der Widerstand 11 gemäß der Ausführungsform von Fig. 1 zu einem RC-Glied zusammengefaßt und dem Multiplexer 23 nachgeschaltet.

Der Zweck des Multiplexers 23, der im Ausführungsbeispiel von Fig. 1 in den VCO 10 integriert ist, besteht darin, zunächst die Ausgangsfrequenz des VCO 10 in Abhängigkeit des Ausgangs des Phasendetektor 3 auf einen stabilen Wert einzustellen. Nachdem der VCO 10 auf dieser stabilen Frequenz schwingt, schaltet der Multiplexer 23 durch das Steuersignal "Datenstart/HS" auf den Ausgang des Phasendetektors2 um.

## Patentansprüche

1. Multistandard-Taktrückgewinnungsschaltung zur Rückgewinnung von einzelnen Teletextsignalen aus einem Videosignal mit mehreren Teletextsignalen (TTD) unterschiedlicher Standards unterschiedlicher Abtastfrequenz (VPS, TXT) unter Erzeugung der jeweiligen genormten Abtastfrequenz (f_{VPS}, f_{TXT}) des jeweiligen Standards (VPS, TXT) mit einem PLL-Schaltkreis,
**dadurch gekennzeichnet,**
**daß** nur ein einziger PLL-Schaltkreis vorgesehen ist, der dazu ausgelegt ist, aus einer von einem Oszillatorschaltkreis bereitgestellten Basisfrequenz (f_{IN}) eine standardunabhängige Bezugsfrequenz (f_{VCO}) zu erzeugen, die ein Vielfaches der jeweiligen Abtastfrequenz (f_{VPS}, f_{TXT}) beträgt, und
**daß** zur Gewinnung jeder der genormten Abtastfrequenzen (f_{VPS}, f_{TXT}) aus der Bezugsfrequenz (f_{VCO}) ein jeweiliger Frequenzteiler (17, 18) vorgesehen ist.

2. Schaltung nach Anspruch 1,
**dadurch gekennzeichnet, daß** der PLL-Schaltkreis aufweist:
einen Frequenz- und Phasendetektor (1) mit einem ersten Eingang (3), an welchem die Basisfrequenz (f_{IN}) anliegt,
einen Phasendetektor (2) mit einem ersten Eingang (5), an welchem die Teletextsignale (TTD) anliegen,
einen spannungsgesteuerten Oszillator (10), der eingangsseitig von den Ausgangssignalen des Frequenz- und Phasendetektors (1) und des Phasendetektors (2) beaufschlagt ist, und dessen Ausgang, an welchem die Bezugsfrequenz (f_{VCO}) bereitsteht, an den Eingang des jeweiligen Frequenzteilers (17, 18) und einen zweiten Eingang (16) des Frequenz- und Phasendetektors (1) angeschlossen ist,
einen Multiplexer (21), der eingangsseitig von den Ausgangssignalen des jeweiligen Frequenzteilers (17, 18) beaufschlagt ist und dessen Ausgang mit einem zweiten Eingang (22) des Phasendetektors (2) verbunden ist.

3. Schaltung nach Anspruch 2,
**dadurch gekennzeichnet, daß** vor die ersten und zweiten Eingänge (3, 16) des Frequenz- und Phasendetektors (1) jeweils ein weiterer Frequenzteiler (4, 14) geschaltet ist.

4. Schaltung nach Anspruch 2 oder 3,
**dadurch gekennzeichnet, daß** zwischen die Ausgänge des Frequenz- und Phasendetektors (1) und des Phasendetektors (2) un den Eingang des spannungsgesteuerten Oszillators (10) ein weiterer Multiplexer (23) geschaltet ist.

5. Schaltung nach einem der Ansprüche 1 bis 4,
**dadurch gekennzeichnet, daß** der jeweilige Frequenzteiler (17, 18) dazu ausgelegt ist, aus der Bezugsfrequenz (f_{VCO}) die jeweilige doppelte Abtastfrequenz (2f_{VPS}, 2f_{TXT}) zu erzeugen.

6. Schaltung nach einem der Ansprüche 1 bis 5,
**dadurch gekennzeichnet, daß** der Oszillatorschaltkreis ein Quarzoszillatorschaltkreis ist.

7. Schaltung nach einem der Ansprüche 2 bis 6,
**dadurch gekennzeichnet, daß** zur Erzeugung eines PAL/VPS- Signals und eines PAL/TXT-Signals aus den Teletextsignalen (TTD) eine Basisfrequenz (f_{IN}) von 6 MHz und eine Bezugsfrequenz (f_{VCO}) von 138,75 MHz und folgende Teilungsfaktoren für die beiden entsprechenden Frequenzteiler (17, 18) vorgesehen sind:
Frequenzteiler (17) zur Gewinnung der VPS-Abtastfrequenz (f_{VPS}) : Faktor 13,875 (n3), und
Frequenzteiler (18) zur Gewinnung der TXT-Abbtastfrequenz (f_{TXT}): Faktor 10 (n4),
und
ein weiterer Frequenzteiler (4) vor dem ersten Eingang (3) des Frequenz- und Phasendetektors (1): Faktor 8 (n1), und
noch ein weiterer Frequenzteiler (14) vor dem zweiten Eingang (16) des Frequenz- und Phasendetektors (1): Faktor 185 (n2) vorgesehen sind.

## Claims

1. A multi-standard clock recovery circuit for the recovery of individual teletext signals from a video signal having several teletext signals (TTD) of different standards of different line frequency (VPS, TXT) by the generation of the respective standardised line frequency (f_{VPS}, f_{TXT}) of the respective standard (VPS, TXT) with a PLL circuit,
**characterised in that** only a single PLL circuit is provided, which is configured to generate from a base frequency (f_{IN}) made available by an oscillation circuit a standard-independent reference frequency (f_{VCO}), which is a multiple of the respective line frequency (f_{VPS}, f_{TXT}),
**and in that** a respective frequency divider (17, 18) is provided for obtaining each of the standardised line frequencies (f_{VPS}, f_{TXT} ) from the reference frequency (f_{VCO}).

2. A circuit according to Claim 1,
**characterised in that** the PLL circuit comprises:
a frequency and phase detector (1) having a first input (3) at which the base frequency (f_{IN}) lies,
a phase detector (2) having a first input (5) at which the teletext signals (TTD) lie,
a voltage-controlled oscillator (10), which at the input side is charged by the output signals of the frequency and phase detector (1) and of the phase detector (2), and whose output, at which the reference frequency (f_{vco}) is available, is connected to the input of the respective frequency divider (17, 18) and a second input (16) of the frequency and phase detector (1),
a multiplexer (21), which at the input side is charged by the output signals of the respective frequency divider (17, 18) and the output of which is connected to the second input (22) of the phase detector (2).

3. A circuit according to Claim 2,
**characterised in that** in each case a further frequency divider (4, 14) is switched in front of each of the first and second inputs (3, 16) of the frequency and phase detector (1).

4. A circuit according to Claim 2 or 3,
**characterised in that** a further multiplexer (23) is switched between the outputs of the frequency and phase detector (1) and of the phase detector (2) and the input of the voltage-controlled oscillator (10).

5. A circuit according to one of Claims 1 to 4,
**characterised in that** the respective frequency divider (17, 18) is designed to generate the respective double line frequency (2f_{VPS}), 2f_{TXT}) from the base frequency (f_{VCO}).

6. A circuit according to one of Claims 1 to 5,
**characterised in that** the oscillator circuit is a quartz oscillator circuit.

7. A circuit according to one of Claims 2 to 6,
**characterised in that** for the generation of a PAL/VPS signal and a PAL/TXT signal from the teletext signals (TTD) a base frequency (f_{IN}) of 6 MHz and a reference frequency (f_{vco}) of 138.75 MHz and following divisors are provided for the two corresponding frequency dividers (17, 18):
frequency divider (17) for obtaining the VPS line frequency (f_{VPS}) : factor 13.875 (n3)
frequency divider (18) for obtaining the TXT line frequency (f_{TXT}): factor 10 (n4),
and
a further frequency divider (4) in front of the first input (3) of the frequency and phase detector (1) : factor 8 (n1), and
yet another frequency divider (14) in front of the second input (16) of the frequency and phase detector (1) : factor 185 (n2) are provided.

## Revendications

1. Circuit de récupération d'horloge multistandard pour récupérer différents signaux de télétexte à partir d'un signal vidéo à plusieurs signaux de télétexte (TTD) de standards différents (VPS, TXT) avec des fréquences de détection différentes en générant la fréquence de détection chaque fois normalisée (f_{VPS}, f_{TXT}) du standard respectif (VPS, TXT) avec un circuit PLL,
**caractérisé en ce qu'**
il ne comporte qu'un unique circuit PLL générant une fréquence de référence (f_{VCO}) indépendante du standard à partir d'une fréquence de base (f_{IN}) fournie par un circuit d'oscillateur, cette fréquence de référence étant un multiple de la fréquence de détection respective (f_{VPS}, f_{TXT}) et,
pour récupérer chacune des fréquences de détection (f_{VPS}, f_{TXT}) à partir de la fréquence de référence (f_{VCO}), il est prévu un diviseur de fréquence respectif (17, 18).

2. Circuit selon la revendication 1,
**caractérisé en ce que**
le circuit PLL comprend :
- un détecteur de fréquence et de phase (1) avec une première entrée (3) recevant la fréquence de base (f_{IN}),
- un détecteur de phase (2) avec une première entrée (5) recevant les signaux de télétexte (TTD),
- un oscillateur commandé en tension (10) recevant en entrée les signaux de sortie du détecteur de fréquence et de phase (1) et du détecteur de phase (2) et dont la sortie fournit la fréquence de référence (f_{VCO}) à l'entrée du diviseur de fréquence (17, 18) respectif et une seconde entrée (16) reliée au détecteur de fréquence et de phase (1),
- un multiplexeur (21) recevant du côté de l'entrée les signaux de sortie du diviseur de fréquence respectif (17, 18) et dont la sortie est reliée à la seconde entrée (22) du détecteur de phase (2).

3. Circuit selon la revendication 2,
**caractérisé en ce qu'**
en amont de la première et de la seconde entrées (3, 16) du détecteur de fréquence et de phase (1), on a chaque fois un autre diviseur de fréquence (4, 14).

4. Circuit selon les revendications 2 ou 3,
**caractérisé en ce qu'**
entre les sorties du détecteur de fréquence et de phase (1) et du détecteur de phase (2) l'entrée de l'oscillateur commandé en tension (10), on a un autre multiplexeur (23).

5. Circuit selon l'une quelconque des revendications 1 à 4,
**caractérisé en ce que**
le diviseur de fréquence (17, 18) respectif est conçu pour générer la fréquence de détection respectivement double (2f_{VPS}, 2f_{TXT}) à partir de la fréquence de référence (f_{VCO}).

6. Circuit selon l'une quelconque des revendications 1 à 5,
**caractérisé en ce que**
le circuit d'oscillateur est un circuit d'oscillateur à quartz.

7. Circuit selon l'une quelconque des revendications 2 à 6,
**caractérisé en ce que**
pour générer un signal PAL/VPS et un signal PAL/TXT à partir des signaux de télétexte (TTD), on utilise une fréquence de base (f_{IN}}) de 6 MHz et une fréquence de référence (f_{VCO}) de 138,75 MHz et les coefficients de division suivants pour les deux diviseurs de fréquence correspondants (17, 18) :
- diviseur de fréquence (17) pour récupérer la fréquence de détection (VPS) (f_{VPS}) : coefficient (13,875 (n3), et
- diviseur de fréquence (18) pour récupérer la fréquence de détection (TXT) (f_{TXT}) : coefficient 10 (n4), et
- un autre diviseur de fréquence (4) en amont de la première entrée (3) du détecteur de fréquence et de phase (1) : coefficient (8) (n1), et
- encore un autre diviseur de fréquence (14) en amont de la seconde entrée (16) du détecteur de fréquence et de phase (1) : coefficient 185 (n2).
